# EUROPEAN PATENT SPECIFICATION

(11) **EP 3 476 221 B1**
(45) Date of publication and mention of the grant of the patent: **04.03.2020**
(21) Application number: 17382715.5
(22) Date of filing: 25.10.2017
(51) Int. Cl.: A23C 11/10, A23L 7/104, A23C 9/12

(54) **METHOD FOR PREPARING A FOOD PRODUCT FROM OAT FLOUR AND PRODUCT THUS OBTAINED**
VERFAHREN ZUR HERSTELLUNG EINES LEBENSMITTELPRODUKTS AUS HAFERMEHL UND SO ERHALTENES PRODUKT
PROCÉDÉ DE PRÉPARATION D'UN PRODUIT ALIMENTAIRE À PARTIR DE FARINE D'AVOINE ET PRODUIT AINSI OBTENU

(43) Date of publication of application: 01.05.2019
(73) Proprietor: Grupo Alimentario Citrus S.L., 46190 Ribarroja del Turia (Valencia) (ES)
(72) Inventor: LACOMBA PERALES, Ramón, 46190 Ribarroja del Turia (VALENCIA) (ES); BOIX MOZAS, Rafael, 46190 Ribarroja del Turia (VALENCIA) (ES); FORCADA, María, 46190 Ribarroja del Turia (VALENCIA) (ES)
(74) Representative: Pons Ariño, Angel

(56) References cited:
- WO-A1-02/37984
- WO-A1-98/08400
- WO-A1-2008/077594
- DATABASE BIOSIS [Online] BIOSCIENCES INFORMATION SERVICE, PHILADELPHIA, PA, US; May 2005 (2005-05), GOKAVI SUMANGALA ET AL: "Oat-based symbiotic beverage fermented by Lactobacillus plantarum, Lactobacillus paracasei ssp casei, and Lactobacillus acidophilus", XP002777417, Database accession no. PREV200510091093 & JOURNAL OF FOOD SCIENCE, vol. 70, no. 4, May 2005 (2005-05), pages M216-M223, ISSN: 0022-1147
- MÅRTENSSON O ET AL: "The effect of yoghurt culture on the survival of probiotic bacteria in oat-based, non-dairy products", FOOD RESEARCH INTERNATI, ELSEVIER, AMSTERDAM, NL, vol. 35, no. 8, 1 January 2002 (2002-01-01), pages 775-784, XP008146502, ISSN: 0963-9969, DOI: 10.1016/S0963-9969(02)00074-1 [retrieved on 2002-02-14]

## Description

The present invention relates to a method for preparing a yogurt-type food product derived from oats as an alternative to similar products derived from soy or cow's milk. Therefore, the invention could fall within the field of the food industry.

### STATE OF THE ART

Animal milk is an essential source of protein, calcium and phosphorus, which means that it is a food that must be present in a healthy diet. However, some sectors of the population are animal milk intolerant and problems such as lactose intolerance or milk protein allergy and intolerance arise. Although the problem of milk lactose intolerance can be significantly reduced by eating fermented products (for example, yogurt), the problems associated to milk protein are not resolved in the same way.

Thus, the need arose to find alternatives to animal milk, the first to appear being soy milk or fermented soy products. Until today, soy has been the most used plant product to prepare products that substitute milk products. However, there are other problems associated to the consumption of these products, especially in the child population: they contain phytates that impede the absorption of zinc, calcium, magnesium, iron and copper, and high concentrations of manganese, aluminium and phytoestrogens, the long term effect of which is unknown in this sector of the population (Bernat Perez N. et al. International Journal of Food Studies. 2015. Vol 4, 49-60). In fact, researchers have been debating for a long time the relative safety and risk of consuming soy for children since soy is a source of environmental hormones (Barrett JR. Environ Health Perspect. 2002 Jun; 110 (6): A294-6). Animal studies link a phytoestrogen-rich diet to a slower development of body weight, lower prostate weights, a reduction of approximately 50% of testosterone and reduction of androstenedione (Weber KS et al. Journal of Endocrinology. 2001. Sep 1; 170 (3): 591-9). All this contributes to the controversy of using soy as a plant source for preparing alternatives to milk products.

In Spain, according to the Spanish Society of General Practitioners and Family Doctors (SEMG), between 30 and 50% of the Spanish population suffers from lactose intolerance. Furthermore, according to the Lactose Intolerance Association (ADILAC, 2008), almost 80% of the child population that has milk protein allergy also develop an allergy to the proteins in liquid soy. For this reason, the child population has very few nutritional options on the market. In addition to this potential market, there is a growing sector of the population that has specific dietary habits (vegetarian, ecological, etc.). In this way, the need to create new products using plants other than soy arise, which increase the consumer's options within the sector of non-dairy products, at the same as offering a product with high nutritional quality that forms part of a healthy and balanced diet.

A plant source that fits this description are oats. Oats are an alternative to cow's and soy milk given that it prevents the problems associated to the latter, and it is also a food that has natural nutritional benefits. Oats and oat-based products have increased in popularity due to their benefits in preventing cardiovascular diseases, high blood pressure, type 2 diabetes, obesity and in colon health, among others. Oats are a cereal with a unique chemical and nutritional profile that can play an critical role in reducing the risk of suffering from chronic illnesses and immunological health and intestinal disorders.

Some methods for preparing products derived from oats are known, such as those described in the documents WO2002037984A1 and WO2002065855A2.

Gokavi Sumangala et al., Journal of Food Science, 2005. vol. 70, no. 4 (M216-M223) discloses an oat-based symbiotic beverage having acceptable sensory and nutritional qualities, fermented by *Lactobacillus plantarum, Lactobacillus paracasei* ssp. *casei,* and *Lactobacillus acidophilus.*

The present invention is presented as an alternative method to those known for preparing a food product that prevents problems associated to cow's milk (lactose intolerance, milk protein intolerance and allergies) and to soy milk (related to phytic acid and phytoestrogens). Furthermore, the method described in the present invention enables organoleptic properties of the (yogurt type) food product to be optimised, especially the texture and consistency thereof.

### DESCRIPTION OF THE INVENTION

In a first aspect, the present invention relates to a method for preparing a food product from oat flour comprising the following stages:
a) mixing oat flour and water at a temperature between 65-75°C in order to obtain an aqueous suspension of oat flour with a dry matter content of between 5 and 15% by weight,
b) hydrolysing the aqueous suspension obtained in stage a) by adding α-amylase,
c) heating the hydrolysed suspension obtained in stage b) between 87 and 93°C to stop the hydrolysis reaction,
d) adding thickeners to the heated suspension obtained in stage c) in a proportion by weight between 3 and 4% with respect to the resulting suspension of said addition,
e) sanitising the suspension obtained in stage d) by heating to 90-92°C, for a period of time between 4.5 and 6 minutes,
f) cooling the suspension obtained in stage e) to temperatures between 40 and 42°C followed by the addition of a starter culture comprising the following lactic acid bacteria: *Lactobacillus Casei* CECT 9104 and *Lactobacillus Acidophilus* DSM 32580, for fermenting the hydrolysed suspension,
g) incubating the suspension obtained in stage f) at a temperature between 41 and 43°C for a sufficient period of time for the suspension to ferment,
h) cooling the product obtained in the previous stage to a temperature between 1 and 4.5°C for the storage or packaging thereof.

An oat-based material suitable for preparing a fermented product is, for example, a pregelatinised oat flour which dissolves easily.

In a conventional yogurt prepared with animal milk, the coagulation of the structure is achieved by lowering the pH of the fermentation, since the milk proteins form a gel by means of calcium caseinate in an acid medium. In a soy-based fermented product, the coagulation is carried out in a similar manner. However, oats are a food with low protein content, which means that the viscosity due to fermentation is also low, since a strong protein network is not formed. Therefore, in order to achieve a product that can be scooped, tapioca starch and pectin are added.

Furthermore, in order to ensure hygienic quality and food safety, a heat treatment is applied before fermentation (sanitising stage). This heat treatment also influences the texture of the product due to the gelatinisation of the starch of the oat flour. Both the heat treatment (due to the gelatinisation of the starch) and the fermentation (due to the formation of protein structures) influence the final texture.

To have greater control over the texture of the final product and prevent the gumminess that the gelatinisation of the starch causes, the starch of the oat flour is hydrolysed by means of treatment with α-amylase. As such, an oat broth or "milk" is obtained to which the necessary ingredients are added in order to obtain the desired texture.

The α-amylase enzyme hydrolyses the a-1,4-glycosidic bonds of the starch, glycogen and the degradation products thereof. As a result of the hydrolysis, short chain dextrins and oligosaccharides with low molecular weight, as well as a small amount of glucose and maltose, are released.

That is, α-amylase effectively hydrolyses the starch (and the fractions thereof) contained in the oat flour, reducing the size, shape and length of the chain thereof. The initial hydrolysis has a liquefaction effect: it causes a rapid reduction of the viscosity of the oat suspension, which enables the subsequent processing to be easier and more effective. This also enables better standardisation of the texture of the product by using texture modifiers.

The fermentation is carried out by means of homofermenter lactic acid bacteria which, by means of the metabolism of the carbohydrates, form lactic acid. A slight increase in the viscosity and a flavour and aroma similar to that of yogurt is achieved by means of fermentation. Furthermore, the fermentation prolongs the useful life as a result of the reduced pH and increase in nutritional quality of the product due to the attributes thereof for health.

In particular, the combined use of *Lactobacillus casei* CECT 9104 and *Lactobacillus acidophilus* DSM 32580 provides the final product with optimal organoleptic properties, especially with regards to the texture and consistency of the final product.

The *L. casei* CECT 9104 strain was isolated from the faeces of a child younger than three months old, who is healthy and breast feeding.

This strain was deposited on 25 February 2016 under the Budabest Treaty in the Spanish Type Culture Collection (CECT) as the International Depositary Authority (with headquarters at Edificio 3 CUE, Parc Científic Universitat de Valencia, C/ Catedrático Agustín Escardino, 9, 46980 Paterna (Valencia)SPAIN). The deposit number assigned was CECT 9104.

The *L. acidophilus* DSM 32580 strain was deposited on 14 August 2017 under the Budapest Treaty in Leibniz-Institut DSMZ-Deutsche Sammlung von Mikroorganismen und Zellkulturen GmbH (with headquarters at Inhoffenstr. 7 B, D-38124 Braunschweig, GERMANY). The deposit number assigned was DSM 32580. This *L. acidophilus* DSM 32580 strain is derived from the commercial strain of human origin *Lactobacillus acidophilus* LA1 deposited in the Belgian Coordinated Collections of Microorganism under the number LMG P21904.

In a preferred embodiment of the process of the invention, the dry matter content in the oat suspension is 10%.

In a preferred embodiment, the hydrolysis stage b) is carried out for a period of time between 8 and 10 mins, more preferably for 10 mins.

In a preferred embodiment, the hydrolysis stage b) is carried out at a temperature between 65-75°C.

In a preferred embodiment, the amount of α-amylase added in stage b) is between 0.01g and 0.1g per 100g of suspension prepared in stage a) (amylaceous base).

In a preferred embodiment, the heating stage c) to stop the hydrolysis reaction is carried out at 93°C.

In a preferred embodiment, the heating stage c) to stop the hydrolysis reaction is carried out for a period of time between 4 and 5 mins, more preferably for 4 mins.

In a preferred embodiment, the thickeners used in stage d) are selected from tapioca starch, pectin or a mixture of both, more preferably a mixture of both.

In a preferred embodiment, in stage d), in addition to the thickeners, sunflower oil in a proportion between 1 and 2% by weight with respect to the suspension formed in said stage d) and/or ingredients selected from the list comprising sugar (2-5% with respect to the suspension formed in said stage d)), aromas (0.1% with respect to the suspension formed in said stage d)), and mixtures thereof, are added.

The temperature of the suspension while the oil is added is not critical, but it could be between 50 and 85°C. The addition of the ingredients: pectin, sugar, aromas, tapioca starch or mixtures thereof are preferably carried out by maintaining the suspension at temperatures between 65-70°C.

In a preferred embodiment, the sanitising stage e) is carried out for 5 mins.

In a preferred embodiment, in stage f), the suspension is cooled to 42°C and in stage g), the suspension is incubated at the same temperature (42°C).

In a preferred embodiment, in stage f), the same amount of bacteria *Lactobacillus casei* CECT 9104 as *Lactobacillus acidophilus* DSM 32580 is added.

In a preferred embodiment, in stage f), the sufficient amount of strains is added in order to have at least 10⁶ ufc of total bacteria per gram of the suspension resulting from said addition.

Preferably, in stage f), the bacteria *Lactobacillus casei* CECT 9104 and *Lactobacillus acidophilus* DSM 32580 are added in order to have a proportion of 0.005% by weight of each one with respect to the suspension resulting from the addition thereof (such that at least 10⁶ ufc of total bacteria per gram of the suspension resulting from the addition thereof is achieved).

In a preferred embodiment, the incubation in stage g) is maintained for a period of time between 2.5 and 3.5 hrs, preferably 3 hrs.

In a preferred embodiment, once the fermentation stage g) is finished and before the cooling stage h), the pH of the suspension is adjusted to values comprised between 4.1 and 3.6 by adding malic or citric acid.

In a preferred embodiment, after the cooling stage h), fruit is added to the final cooled product. Other types of food such as chocolate, jam, cereals, etc. could be added.

A second aspect of the invention is a food product obtained by means of the method described in the first aspect of the invention. The product is preferably yogurt type (creamy), with a pH lower than 4.0 and a consistency greater or equal to 0.3 cm/sg at 25°C (measured using Bostwick).

In another preferred embodiment, the product does not comprise soy or cow's milk.

In another preferred embodiment, the product comprises at least 10⁶ ufc of lactic acid bacteria (the sum of *Lactobacillus casei CECT 9104* and *Lactobacillus acidophilus DSM 32580)* per gram of food product.

Another aspect of the invention relates to a composition or starter culture comprising the strains *Lactobacillus casei* CECT 9104 and *Lactobacillus acidophilus* DSM 32580.

In a preferred embodiment, the composition or starter culture comprises the strains *Lactobacillus casei* CECT 9104 and *Lactobacillus acidophilus* DSM 32580 in a ratio of 1:1.

Another aspect of the invention relates to the use of the composition comprising the strains *Lactobacillus casei* CECT 9104 and *Lactobacillus acidophilus* DSM 32580, for fermenting a cereal, preferably oat flour. In particular, for fermenting a hydrolysed oat flour suspension to obtain a fermented food product.

Throughout the description and in the claims, the word "comprises" and its variants are not intended to exclude other technical characteristics, additives, components or steps. For those skilled in the art, other objects, advantages and characteristics of the invention may be deduced from both the description and the practical use of the invention. The following examples are provided by way of illustration and are not intended to be limiting of the present invention.

### EXAMPLES

The invention shall be illustrated by means of examples carried out by the inventors, which show the usefulness of the method of the present invention for obtaining a yogurt-type food product, derived from oats, with optimal organoleptic properties, especially the texture and consistency thereof.

### Example 1

### Preparation of an oat yogurt by means of the method of the present invention and by means of using other strains other than those of the present invention.

In order to prepare the food product derived from oat flour, in a hopper, 0.01% by weight of α-amylase, with respect to the suspension formed, is added to an oat flour and water suspension containing 10% by weight of dry matter; the temperature of the suspension is kept between 65 - 75°C and the hydrolysis reaction is left to take place for 10 mins.

Subsequently, in order to stop the hydrolysis reaction, the temperature of the resulting suspension is raised to 93°C in order to inactivate the alpha-amylase enzyme and it is maintained at said temperature for 4 mins.

Sunflower oil is then dosed at 1.5% by weight with respect to the suspension resulting from said addition. The temperature at which the oil is added is not relevant; the suspension can be maintained between 50-85°C.

Once the oil is added, the following minor ingredients are added: pectin, sugar, aroma and tapioca starch, at 0.8%, 4%, 0.02% and 3%, respectively, and with respect to the suspension resulting from said addition, maintaining the suspension at 65-70°C.

After adding the minor ingredients, the temperature of the suspension is increased to 90-92°C and it is maintained constant for 5 mins in order to sanitise the suspension. After this time has elapsed, the suspension is moved to a fermenter and cooled to 42°C. Once in the fermenter, the ferments are added at 0.005% by weight of each of them with respect to the solution resulting from said addition, starting from a concentration of bacteria in the starter culture of 5x10¹⁰ufc/g and the temperature is maintained at 42°C for 3 hrs and without stirring.

Four food products were prepared using the following combinations of ferments, respectively:
1) *L. acidophilus* DSM 32580 *and L. casei* CECT 9104 (method of the invention)
2) *L acidophilus* DSM 32580 and *L. casei* BPL77 (CECT 4040)
3) *L acidophilus* DSM 32580 and *L. casei* BPL78 (CECT 5276)
4) *L acidophilus* DSM 32580 and *L. casei* BPL79 (CECT 5275)

The strains that the inventors have named *L. casei* BPL77, *L. casei* BPL78 and *L. casei* BPL79 are strains of *L. casei* that are accessible in the Spanish Type Culture Collection (CECT) and that have the access number CECT 4040, CECT 5276 and CECT 5275 respectively.

After the three hours of incubation have passed, the fermented product is adjusted to a pH value of 4.1 with malic acid and sodium citrate at the same temperature of 42°C.

Subsequently, the product is cooled to below 4.5°C and it is sent to be packaged.

The four prepared products were characterised at a physical and chemical level, measuring the pH, °Brix (refractometry measurement that indirectly provides the sugar content in solution), acidity and consistency. These parameters were measured when the product was cooled after fermentation, when stored at 4°C and after 24 hours of storage at 4°C.

The pH was determined with a pH-Meter BASIC 20 pH meter (Hach Lange Spain S.L.U.); the °Brix, with a Anton Paar Abbemat 300 (type) refractometer, the acidity was measured by means of an acid-base titration, with an automatic Mettler Toledo T50 titrator, and the consistency by means of a Bostwick ZXCON consistometer, giving the consistency in cm (centimeters that the fluid or food product prepared travels during 30 seconds at 25°C), such that the higher value obtained (more cm), the lower the thickness.

The viscosity was measured by means of a Brookfield DVE viscometer, with the sample at 4°C.

Furthermore, an organoleptic qualitative test was also carried out on the product in terms of smell, taste and creaminess 24 hours after having been prepared, which is the soonest it will be consumed.

The following table (Table 1) shows the results obtained:

**Table 1: Values obtained for the products prepared using L. acidophilus DSM 32580, in combination with L. casei CECT 9104, BPL77, BPL78 and BPL79 respectively, as ferments:**

| | | **CECT 9104** | **BPL77** | **BPL78** | **BPL79** |
|---|---|---|---|---|---|
| **1hr of refrigeration** | **pH** | 3.49 | 3.75 | 3.8 | 3.96 |
| | **°Brix** | 21.9 | 20.4 | 18.2 | 20.2 |
| | **Acidity (% citric acid)** | 0.35 | 0.29 | 0.33 | 0.29 |
| | **Consistency (cm)** | 9 | 6 | 8.5 | 6.5 |
| | **Viscosity (cP)** | 6500 | 9400 | 6980 | 8530 |
| **24hrs of refrigeration** | **pH** | 3.74 | 3.82 | 3.71 | 3.84 |
| | **°Brix** | 18.9 | 23.9 | 21.2 | 19.1 |
| | **Acidity (% citric acid)** | 0.34 | 0.34 | 0.32 | 0.361 |
| | **Consistency (cm)** | 10 | 6.6 | 4.5 | 6 |
| | **Viscosity (cP)** | 13500 | 16800 | 16750 | 17500 |

After different samples have been carried out with each of the strains of *L. casei* we can conclude that, based on the results obtained through the physico-chemical analyses, significant differences have been found between the different strains with respect to the consistency of the product. In particular, the strain *L. casei* CECT 9104, which is the one used in the present invention in combination with *L. acidophilus,* provides a yogurt-type product with a greater consistency (greater number of cm travelled) with respect to the rest of the samples. A greater consistency, greater creaminess (lower thickness), which means that a creamier, Greek-type yogurt is obtained.

In the case of *L. casei* CECT 9104, the fermentative action thereof is linked to the texture and consistency of the product, it has been observed that different textures are obtained depending on the strain, which means that the present invention uses that which provides a creamier texture and consistency.

## Claims

1. A method for preparing a food product from oat flour comprising the following stages:
a) mixing oat flour and water at a temperature between 65-75°C in order to obtain an aqueous suspension of oat flour with a dry matter content of between 5 and 15% by weight,
b) hydrolysing the aqueous suspension obtained in stage a) by adding α-amylase,
c) heating the hydrolysed suspension obtained in stage b) between 87 and 93°C to stop the hydrolysis reaction,
d) adding thickeners to the heated suspension obtained in stage c) in a proportion by weight between 3 and 4% with respect to the resulting suspension of said addition,
e) sanitising the suspension obtained in stage d) by heating to 90-92°C, for a period of time between 4.5 and 6 minutes,
f) cooling the suspension obtained in stage e) to temperatures between 40 and 42°C followed by the addition of a starter culture comprising the following lactic acid bacteria: *Lactobacillus casei* CECT 9104 and *Lactobacillus acidophilus* DSM 32580, to ferment the hydrolysed suspension,
g) incubating the suspension obtained in stage f) at a temperature between 41 and 43°C for a sufficient period of time for the suspension to ferment, and
h) cooling the product obtained in the previous stage at a temperature between 1 and 4.5°C for the storage thereof.

2. The method, according to claim 1, wherein, in stage a), the dry matter content in the oat suspension is 10% by weight.

3. The method, according to any of claims 1-2, wherein the hydrolysis stage b) is carried out for a period of time between 8 and 10 mins.

4. The method, according to any of claims 1-3, wherein the hydrolysis stage b) is carried out at a temperature between 65-75°C.

5. The method, according to any of claims 1-4, wherein the heating in stage c) is carried out at 93°C.

6. The method, according to any of claims 1-5, wherein the heating in stage c) is carried out for a period of time between 4 and 5 mins.

7. The method, according to any of claims 1-6, wherein the thickeners added in stage d) are selected from among tapioca starch, pectin or a mixture of both.

8. The method, according to any of claims 1-7, wherein, in stage d), sunflower oil and/or ingredients selected from the list comprising sugar, aromas, and mixtures thereof are added.

9. The method, according to any of claims 1-8, wherein, in stage f), the suspension is cooled to 42°C and the fermentation is maintained in stage g) at this same temperature.

10. The method, according to any of claims 1-9, wherein, in stage f), the same amount of bacteria *Lactobacillus casei* CECT 9104 as *Lactobacillus acidophilus* DSM 32580 is added.

11. The method, according to any of claims 1-10, wherein, in stage f), the sufficient amount of strains is added in order to have at least 10⁶ ufc of total bacteria per gram of the suspension resulting from said addition.

12. The method, according to any of claims 1-11, wherein the incubation in stage g) is maintained for a period of time between 2.5 and 3.5 hrs.

13. The method, according to any of claims 1-12, wherein once the fermentation stage g) is finished and before the cooling stage h), the pH of the suspension is adjusted to values comprised between 4.1 and 3.6 by adding malic or citric acid.

14. The method, according to any of claims 1-13, wherein, after the cooling stage h), fruit is added to the final product.

15. A fermented product obtainable by means of the method described in any of claims 1-14.

16. The fermented product, according to claim 15, wherein the product is yogurt type.

17. The fermented product, according to claim 15 or 16, wherein the product does not comprise soy or cow's milk.

18. A composition comprising the strains *Lactobacillus casei* CECT 9104 and *Lactobacillus acidophilus* DSM 32580.

19. The composition, according to claim 18, wherein the ratio between the strains *Lactobacillus casei* CECT 9104 and *Lactobacillus acidophilus* DSM 32580 is 1:1.

20. A use of the composition defined in claim 18 or 19 for fermenting a cereal, preferably oat flour.

## Patentansprüche

1. Verfahren zur Herstellung eines Lebensmittelprodukts aus Hafermehl, das die folgenden Schritte umfasst:
a) Mischen von Hafermehl und Wasser bei einer Temperatur zwischen 65 bis 75 °C, um eine wässrige Suspension von Hafermehl mit einem Trockensubstanzgehalt zwischen 5 und 15 Gew.-% zu erhalten,
b) Hydrolysieren der in Schritt a) erhaltenen wässrigen Suspension durch Zugeben von a-Amylase,
c) Erwärmen der in Schritt b) erhaltenen hydrolysierten Suspension auf zwischen 87 und 93 °C, um die Hydrolysereaktion zu beenden,
d) Zugabe von Verdickungsmitteln zu der in Schritt c) erhaltenen erwärmten Suspension in einem Gewichtsanteil zwischen 3 und 4 % in Bezug auf die sich ergebende Suspension der Zugabe,
e) Reinigen der in Schritt d) erhaltenen Suspension durch Erwärmen auf 90 bis 92 °C für einen Zeitraum zwischen 4,5 und 6 Minuten,
f) Abkühlen der in Schritt e) erhaltenen Suspension auf Temperaturen zwischen 40 und 42 °C, gefolgt von der Zugabe einer Starterkultur, umfassend die folgenden Milchsäurebakterien: *Lactobacillus casei* CECT 9104 und *Lactobacillus acidophilus* DSM 32580 zum Fermentieren der hydrolysierten Suspension,
g) Inkubieren der in Schritt f) erhaltenen Suspension bei einer Temperatur zwischen 41 und 43 °C für einen ausreichenden Zeitraum zum Fermentieren der Suspension und
h) Abkühlen des in dem vorhergehenden Schritt erhaltenen Produkts bei einer Temperatur zwischen 1 und 4,5 °C zur Lagerung davon.

2. Verfahren nach Anspruch 1, wobei in Schritt a) der Trockensubstanzgehalt in der Hafersuspension 10 Gew.-% beträgt.

3. Verfahren nach einem der Ansprüche 1 bis 2, wobei die Hydrolyse in Schritt b) für einen Zeitraum zwischen 8 und 10 Min. durchgeführt wird.

4. Verfahren nach einem der Ansprüche 1 bis 3, wobei die Hydrolyse in Schritt b) bei einer Temperatur zwischen 65 bis 75 °C durchgeführt wird.

5. Verfahren, nach einem der Ansprüche 1 bis 4, wobei das Erwärmen in Schritt c) bei 93 °C durchgeführt wird.

6. Verfahren nach einem der Ansprüche 1 bis 5, wobei die Erwärmung in Schritt c) für einen Zeitraum zwischen 4 und 5 Min. durchgeführt wird.

7. Verfahren nach einem der Ansprüche 1 bis 6, wobei die in Schritt d) zugegebenen Verdickungsmittel aus Tapiokastärke, Pektin oder einer Mischung aus beiden ausgewählt sind.

8. Verfahren nach einem der Ansprüche 1 bis 7, wobei in Schritt d), Sonnenblumenöl und/oder Bestandteile zugegeben werden, die aus der Liste, umfassend Zucker, Aromen und Mischungen davon, ausgewählt sind.

9. Verfahren, nach einem der Ansprüche 1 bis 8, wobei in Schritt f) die Suspension auf 42 °C abgekühlt wird und die Fermentation in Schritt g) bei der gleichen Temperatur beibehalten wird.

10. Verfahren nach einem der Ansprüche 1 bis 9, wobei in Schritt f) die gleiche Menge an den Bakterien *Lactobacillus casei* CECT 9104 sowie *Lactobacillus acidophilus* DSM 32580 zugegeben wird.

11. Verfahren, nach einem der Ansprüche 1 bis 10, wobei in Schritt f) die ausreichende Menge an Stämmen zugegeben wird, um mindestens 10⁶ KBE Gesamtbakterien pro Gramm der Suspension, die sich aus der Zugabe ergibt, aufzuweisen.

12. Verfahren nach einem der Ansprüche 1 bis 11, wobei die Inkubation in Schritt g) für einen Zeitraum zwischen 2,5 und 5 Std. beibehalten wird.

13. Verfahren, nach einem der Ansprüche 1 bis 12, wobei, sobald der Fermentationsschritt g) beendet ist, und vor dem Kühlschritt h), der pH-Wert der Suspension auf Werte zwischen 4,1 und 3,6 durch Zugabe von Apfel- oder Citronensäure eingestellt wird.

14. Verfahren, nach einem der Ansprüche 1 bis 13, wobei nach dem Kühlschritt h) Obst zu dem Endprodukt zugegeben wird.

15. Fermentiertes Produkt, erhältlich durch das Verfahren, das in einem der Ansprüche 1 bis 14 beschrieben wird.

16. Fermentiertes Produkt nach Anspruch 15, wobei das Produkt ein joghurtartiges ist.

17. Fermentiertes Produkt nach Anspruch 15 oder 16, wobei das Produkt keine Soja- oder Kuhmilch umfasst.

18. Zusammensetzung, umfassend die Stämme *Lactobacillus casei* CECT 9104 und *Lactobacillus acidophilus* DSM 32580.

19. Zusammensetzung nach Anspruch 18, wobei das Verhältnis zwischen den Stämmen *Lactobacillus casei* CECT 9104 und *Lactobacillus acidophilus* DSM 32580 1:1 beträgt.

20. Verwendung der Zusammensetzung nach Anspruch 18 oder 19 zum Fermentieren von Getreide, vorzugsweise Hafermehl.

## Revendications

1. Procédé de préparation d'un produit alimentaire à partir de farine d'avoine comprenant les étapes suivantes :
a) mélanger la farine d'avoine et l'eau à une température comprise entre 65 et 75 °C pour obtenir une suspension aqueuse de farine d'avoine avec une teneur en matière sèche comprise entre 5 et 15 % en poids,
b) hydrolyser la suspension aqueuse obtenue à l'étape a) en ajoutant de l'a-amylase,
c) chauffer la suspension hydrolysée obtenue à l'étape b) entre 87 et 93 °C pour arrêter la réaction d'hydrolyse,
d) ajouter des épaississants à la suspension chauffée obtenue à l'étape c) dans une proportion pondérale comprise entre 3 et 4 % par rapport à la suspension résultante de ladite addition,
e) désinfection de la suspension obtenue à l'étape d) en chauffant à 90-92 °C, pendant une durée comprise entre 4,5 et 6 minutes,
f) refroidir la suspension obtenue à l'étape e) à des températures comprises entre 40 et 42 °C puis ajouter une culture starter comprenant les bactéries lactiques suivantes: *Lactobacillus casei* CECT 9104 et *Lactobacillus acidophilus* DSM 32580, pour fermenter la suspension hydrolysée,
g) incuber la suspension obtenue à l'étape f) à une température comprise entre 41 et 43 °C pendant une durée suffisante pour que la suspension fermente, et
h) refroidir le produit obtenu à l'étape précédente à une température comprise entre 1 et 4,5 °C pour son stockage.

2. Procédé, selon la revendication 1, dans lequel, à l'étape a), la teneur en matière sèche de la suspension d'avoine est de 10 % en poids.

3. Procédé, selon l'une quelconque des revendications 1-2, dans lequel l'étape d'hydrolyse b) est effectuée pendant une durée comprise entre 8 et 10 min.

4. Procédé, selon l'une quelconque des revendications 1-3, dans lequel l'étape d'hydrolyse b) est effectuée à une température comprise entre 65 et 75 °C.

5. Procédé, selon l'une quelconque des revendications 1-4, dans lequel le chauffage à l'étape c) est effectué à 93 °C.

6. Procédé, selon l'une quelconque des revendications 1-5, dans lequel le chauffage à l'étape c) est effectué pendant une durée comprise entre 4 et 5 min.

7. Procédé, selon l'une quelconque des revendications 1-6, dans lequel les épaississants ajoutés à l'étape d) sont choisis parmi la fécule de tapioca, la pectine ou un mélange des deux.

8. Procédé, selon l'une quelconque des revendications 1-7, dans lequel, à l'étape d), l'huile de tournesol et/ou les ingrédients choisis dans la liste comprenant le sucre, les arômes et des mélanges de ces derniers sont ajoutés.

9. Procédé, selon l'une quelconque des revendications 1-8, dans lequel, à l'étape f), la suspension est refroidie à 42 °C et la fermentation est maintenue à l'étape g) à cette même température.

10. Procédé, selon l'une quelconque des revendications 1-9, dans lequel, à l'étape f), la même quantité de bactéries *Lactobacillus casei* CECT 9104 que *Lactobacillus acidophilus* DSM 32580 est ajoutée.

11. Procédé, selon l'une quelconque des revendications 1-10, dans lequel, à l'étape f), la quantité suffisante de souches est ajoutée pour avoir au moins 10⁶ ufc de bactéries totales par gramme de la suspension résultante de ladite addition.

12. Procédé, selon l'une quelconque des revendications 1-11, dans lequel l'incubation à l'étape g) est maintenue pendant une durée comprise entre 2,5 et 3,5 h.

13. Procédé, selon l'une quelconque des revendications 1-12, dans lequel une fois l'étape de fermentation g) terminée et avant l'étape de refroidissement h), le pH de la suspension est ajusté à des valeurs comprises entre 4,1 et 3,6 en ajoutant de d'acide malique ou citrique.

14. Procédé, selon l'une quelconque des revendications 1-13, dans lequel, après l'étape de refroidissement h), un fruit est ajouté au produit final.

15. Produit fermenté pouvant être obtenu au moyen du procédé décrit dans l'une quelconque des revendications 1-14.

16. Produit fermenté, selon la revendication 15, dans lequel le produit est du type yaourt.

17. Produit fermenté, selon la revendication 15 ou 16, dans lequel le produit ne comprend pas de lait de soja ou de vache.

18. Composition comprenant les souches *Lactobacillus casei* CECT 9104 et *Lactobacillus acidophilus* DSM 32580.

19. Composition, selon la revendication 18, dans laquelle le rapport entre les souches *Lactobacillus casei* CECT 9104 et *Lactobacillus acidophilus* DSM 32580 est de 1:1.

20. Utilisation de la composition définie dans la revendication 18 ou 19 pour la fermentation d'une céréale, de préférence la farine d'avoine.
